# EUROPÄISCHE PATENTANMELDUNG

(11) **EP 1 510 954 A1**
(43) Veröffentlichungstag der Anmeldung: **02.03.2005**
(21) Anmeldenummer: 04018987.0
(22) Anmeldetag: 11.08.2004
(51) Int. Cl.: G06F 17/60

(54) **Datenbankmodul und Verfahren zur Ermittlung von Personaldaten**

(30) Priorität: 28.08.2003 DE 10339578
(71) Anmelder: Festo AG & Co, 73734 Esslingen (DE)
(72) Erfinder: Neher, Hermann, 73773 Aichwald (DE)
(74) Vertreter: Bregenzer, Michael

(57) **Zusammenfassung**

Die Erfindung betrifft ein Verfahren sowie ein Datenbankmodul (18) zur Ermittlung von Personaldaten (24). Das Datenbankmodul (18) hat
- Mittel (23) zur Erfassung von Ist-Kompetenzwerten (27,28,30,31,33,34) von bei einem Unternehmen (22) beschäftigten oder zu beschäftigenden Personen (19-21, 88, 87) zur Bildung von Ist-Kompetenzprofilen (29, 32, 35),
- Mittel (53) zur Erfassung von Soll-Kompetenzwerten (55, 56) für mindestens eine Person (19-21, 88, 87) zur Bildung eines Soll-Kompetenzprofils (54), und
- Vergleichsmittel (59) zum Veranlassen zumindest einer Maßnahme anhand eines Vergleichs der Ist-Kompetenzwerte (27,28,30,31,33,34) und der Soll-Kompetenzwerte (55, 56).

## Beschreibung

Die Erfindung betrifft ein Datenbankmodul, eine Rechneranordnung sowie Verfahren zur Ermittlung von Personaldaten.

Üblicherweise werden Personaldaten von Personen, die in einem Unternehmen beschäftigt sind oder möglicherweise beschäftigt werden sollen, schriftlich festgehalten. Beispielsweise werden Personalakten für diese Personen geführt. Unter Personaldaten versteht man üblicherweise Geburtsdatum, Betriebszugehörigkeit, berufliche bzw. akademische Ausbildung oder Zeugnisse der Personen. Prinzipiell besteht auch die Möglichkeit, Personaldaten beispielsweise in Computern zu speichern, beispielsweise in einer Datenbank zu erfassen. Die Personaldaten sind der jeweiligen Person zugeordnet und werden beispielsweise unter deren Namen, Personalkennziffer oder dergleichen abgespeichert. Mit Hilfe des Namens oder der Personalkennziffer können die Daten wieder bei der Datenbank abgefragt werden. Die Personaldaten können beispielsweise bei der Erteilung eines Arbeitszeugnisses, bei der Gehaltseinstufung oder dergleichen verwendet werden.

Als Lenkungsinstrument für ein Unternehmen oder als Bewertungshilfe für eine Bewertung des Unternehmens sind derartige Personaldaten jedoch z.B. nicht geeignet. Es ist nicht möglich, anhand der Personaldaten beispielsweise das Unternehmen neu auszurichten, neue Aufgaben und Projekte für das Unternehmen zu ermitteln oder dergleichen. Vereinfacht gesagt, ist eine effiziente Unternehmensführung mit Hilfe der in herkömmlicher Weise archivierten Personaldaten nicht möglich.

Es ist daher die Aufgabe der Erfindung, Vorrichtungen und Verfahren zu einer effizienten Unternehmensführung anhand von Personaldaten bereitzustellen.

Zur Lösung der Aufgabe sieht die Erfindung ein Datenbankmodul zur Ermittlung von Personaldaten mit folgenden Mitteln vor:
- Mittel zur Erfassung von Ist-Kompetenzwerten von bei einem Unternehmen beschäftigten oder zu beschäftigenden Personen zur Bildung von Ist-Kompetenzprofilen,
- Mittel zur Erfassung von Soll-Kompetenzwerten für mindestens eine Person zur Bildung eines Soll-Kompetenzprofils, und
- Vergleichsmittel zum Veranlassen zumindest einer Maßnahme anhand eines Vergleichs der Ist-Kompetenzwerte und der Soll-Kompetenzwerte.

Das Soll-Kompetenzprofil oder mehrere Soll-Kompetenzprofile für mehrere Personen sind sozusagen Filter, mit denen die Ist-Kompetenzwerte ausgewertet werden. Die Eingabe der Ist-Kompetenzwerte kann manuell erfolgen. Bevorzugt ist allerdings, dass die Soll-Kompetenzwerte in elektronischer Form dem Datenbankmodul übermittelt werden. Beispielsweise können die Soll-Kompetenzwerte von einer Balanced-Scorecard-Software übermittelt werden. Das Datenbankmodul kann in Software und/oder in Hardware ausgeführt sein. Besonders bevorzugt ist eine Version, bei der das Datenbankmodul mit einer betriebswirtschaftlichen Software, beispielsweise SAP R2 oder R3, kooperiert und/oder modulartig in eine derartige Software integriert ist.

Eine weitere Variante der Erfindung sieht ein Datenbankmodul zur Ermittlung von Personaldaten mit:
- Erfassungsmitteln zur Erfassung von Ist-Kompetenzwerten von einer bei einem Unternehmen beschäftigten Person zur Bildung von Ist-Kompetenzprofilen,
- Mitteln zur Ermittlung mindestens einer finanziellen Bewertungszahl für mindestens eine anhand der Ist-Kompetenzwerte charakterisierten Person durch Multiplikation mindestens eines Ist-Kompetenzwerts mit einem Bewertungsfaktor, und
- Ausgabemitteln zur Ausgabe der mindestens einen Bewertungszahl.

Die Ausgabemittel geben die Bewertungszahl beispielsweise an einer Bedienoberfläche aus. Besonders bevorzugt ist jedoch, dass die Ausgabemittel die Bewertungszahl, vorzugsweise eine Gruppe von Bewertungszahlen an ein betriebswirtschaftliches Softwaremodul, beispielsweise in der Art der vorgenannten betriebswirtschaftlichen Software, übermitteln.

Die Personaldaten haben demnach einen weiteren Nutzen: durch das erfindungsgemäße Datenbankmodul kann das personelle Potential des Unternehmens mit finanziellen Werten bewertet werden, was beispielsweise für die Beschaffung von Krediten für das Unternehmen von Bedeutung ist. Das menschliche Kapital des Unternehmens kann auf diese Weise einfach in eine Bilanz einbezogen werden, die zumindest teilweise beispielsweise durch ein betriebswirtschaftliches Softwaremodul und/oder das erfindungsgemäße Datenbankmodul generiert wird.

Ferner sieht die Erfindung Verfahren vor, die in der Art der vorgenannten Datenbankmodule funktionieren.

Vorteilhafte Ausgestaltungen der Erfindung finden sich in den abhängigen Ansprüchen sowie in der Beschreibung.

Vorzugsweise sind bei den vorgenannten Datenbankmodulen Mittel zur Auswahl der Ist-Kompetenzwerte und/oder der Soll-Kompetenzwerte aus einer Auswahlliste mit vorbestimmten Kompetenzwert-Stufen vorhanden. Die Kompetenzwerte werden sozusagen indexiert. In der Auswahlliste sind beispielsweise Kompetenzstufen Einsteiger, Lerner, Kenner, Könner und Spezialist vorgesehen. Ein Einsteiger hat keine berufliche Vorbildung. Ein Lerner hingegen weist bereits eine gewisse Erfahrung auf. Ein Kenner hat im Vergleich zum Lerner bereits weitere Erfahrungen gesammelt und ein Könner beherrscht eine Tätigkeit bereits vollständig. Ein Spezialist hat Kenntnisse, die weit über das geforderte Maß hinausgehen. Die Angabe der Ist-Kompetenzwerte, bzw. der Soll-Kompetenzwerte wird durch die vorgenannte Maßnahme erleichtert. Der Bediener muss lediglich aus der ihm angebotenen Auswahlliste mit den Kompetenzwert-Stufen auswählen. Es versteht sich, dass aber auch gleitende Werte, feine Stufungen oder dergleichen vorgesehen sein können.

Zweckmäßigerweise sind bei den Datenbankmodulen Mittel zum Gruppieren der Ist-Kompetenzwerte und/oder der Soll-Kompetenzwerte in Kompetenzkategorien vorhanden. Derartige Kompetenzkategorien sind beispielsweise die Fachkompetenz, die Methodenkompetenz, die soziale Kompetenz, die persönliche Kompetenz sowie die unternehmerische Kompetenz einer Person. Man kann die Kompetenzkategorien auch als Kompetenzfelder bezeichnen. Die fachliche Kompetenz umfasst beispielsweise die Ausbildung, das analytische Denken und Handeln, die Qualitätsorientierung einer Person. Die Methodenkompetenz betrifft beispielsweise Spezialkenntnisse, Sprachen, Problemlösungsfähigkeit, Prozesssicherheit und dergleichen. Unter einer sozialen Kompetenz werden z.B. die Teamfähigkeit, Kooperationsfähigkeit und Integrationsfähigkeit, die Kontaktfähigkeit, die Überzeugungsfähigkeit oder dergleichen einer Person verstanden. Persönliche Kompetenzen können beispielsweise die Zielorientierung, die Urteilsfähigkeit, das Selbstvertrauen, der Humor und die Flexibilität einer Person sein. Die unternehmerische Kompetenz betrifft beispielsweise die Fähigkeit, Tätigkeiten zu delegieren, Kostenbewusstsein, Wirtschaftlichkeitsdenken, strategisches Denken und Handeln und dergleichen. Es versteht sich, dass auch andere Gruppierungen denkbar sind.

Vorzugsweise weisen die Datenbankmodule Mittel zum Versehen der Ist-Kompetenzwerte und/oder der Soll-Kompetenzwerte mit einem oder mehreren Gewichtungsfaktoren auf. Die Gewichtungsfaktoren sind vorzugsweise abhängig von den Kompetenzkategorien. Beispielsweise kann die fachliche Kompetenz höher gewertet werden als die unternehmerische Kompetenz oder dergleichen. Die Gewichtungsfaktoren sind vorzugsweise dynamisch durch einen Bediener des Datenbankmoduls festlegbar. Durch die Gewichtungsfaktoren kann der Bediener festlegen, welche Kompetenzwerte für eine aktuelle Datenauswertung besonders wichtig sind.

Vorzugsweise ermitteln die Vergleichsmittel bei dem Vergleich der Ist-Kompetenzwerte und der Soll-Kompetenzwerte Differenzwerte. Bei einem negativen Differenzwert fehlt der betreffenden Person z.B. eine Teilkompetenz, bei einer positiven Differenz ist die Kompetenz bei der Person stärker ausgeprägt als durch den Soll-Kompetenzwert jeweils gefordert ist.

Bei dem erstgenannten erfindungsgemäßen Datenbankmodul umfasst die mindestens eine Maßnahme, die anhand des Vergleiches des Kompetenzwerte ausgelöst wird, verschiedene Varianten, die auch miteinander kombiniert sein können.

Vorzugsweise umfasst die Maßnahme die Ermittlung einer Zielperson. Beispielsweise kann durch einen Soll-Ist-Vergleich der Kompetenzwerte eine Zielperson ausgewählt werden.

Die nachfolgende Maßnahme sieht eine Weiterqualifizierung der durch das Datenbankmodul erfassten Personen vor. Beispielsweise kann anhand eines Soll-Ist-Vergleichs ermittelt werden, welche Qualifizierungsmaßnahme für eine oder mehrere Personen erforderlich ist. Die Qualifizierungsmaßnahme dient zur Verminderung einer Abweichung zwischen den Ist- und den Soll-Kompetenzwerten. Die Qualifizierungsmaßnahmen sind beispielsweise in der Art der Ist-Kompetenzwerte bzw. der Soll-Kompetenzwerte indexiert in einem Speicher des Datenbankmoduls gelegt. Das Datenbankmodul prüft beispielsweise, ob ein vorbestimmter Differenzwert zwischen einem Soll-Kompetenzwert und einem Ist-Kompetenzwert durch den entsprechenden, der Qualifizierungsmaßnahme zugeordneten Kompetenzverbesserungswert vermindert werden kann.

Weitere Auswahlkriterien für die Qualifizierungsmaßnahme können beispielsweise deren Preis, deren Dauer oder dergleichen sein. Das Datenbankmodul wählt die am besten geeignete Qualifizierungsmaßnahme aus. Es ist auch möglich, dass das Datenbankmodul mehrere Qualifizierungsmaßnahmen anbietet, wobei diese zweckmäßigerweise in einer vorbestimmten Reihenfolge nach mindestens einem Sortierkriterium sortiert sind. Ein Bediener kann die entsprechende Qualifizierungsmaßnahme beispielsweise an einer Bedienoberfläche des Datenbankmoduls aktivieren.

Es versteht sich, dass die erfindungsgemäßen Datenbankmodule prinzipiell zur Bearbeitung der Kompetenzwerte einer einzigen Person geeignet sind. Besonders vorteilhaft erweisen sie sich jedoch bei der Bearbeitung vom Kompetenzwert-Daten mehrerer Personen. Eine besonders bevorzugte Variante der Erfindung sieht vor, dass das erfindungsgemäße Datenbankmodul Mittel zur Erfassung von Soll-Kompetenzwerten mehrerer Personen einer ersten Personengruppe zur Durchführung eines ersten Arbeitsprojekts sowie Mittel zur Ermittlung von für das erste Arbeitsprojekt in dem Unternehmen verfügbaren Personen anhand der Ist-Kompetenzwerte aufweist. Für das Arbeitsprojekt werden Soll-Kompetenzwerte mehrerer Personen definiert. Das Datenbankmodul ermittelt anhand dieser Soll-Kompetenzwerte mehrere Personen anhand der Ist-Kompetenzwerte. Diese Maßnahme kann für ein einziges Arbeitsprojekt, beispielsweise die Fertigung eines vorbestimmten Produktes oder dergleichen vorgesehen sein.

Es ist auch möglich, dass mehrere Arbeitsprojekte in derartiger Weise bearbeitet werden. Beispielsweise kann ein erstes Arbeitsprojekt in dem Unternehmen bereits durchgeführt werden. Für das erste Arbeitsprojekt wird eine bestimmte Personengruppe benötigt. Ist nun ein zweites Arbeitsprojekt geplant, werden die dafür benötigten Personen in der vorgenannten Weise durch das Datenbankmodul ermittelt. Das erfindungsgemäße Datenbankmodul ermittelt dann zweckmäßigerweise Personen, die sowohl für das erste als auch für das zweite Arbeitsprojekt erforderlich sind, jedoch in dem Unternehmen nur einziges Mal verfügbar sind. Die Personen werden dementsprechend für beide Arbeitsprojekte benötigt.

Bei einer derartigen Ausgangssituation dient das erfindungsgemäße Datenbankmodul zweckmäßigerweise als ein Simulationswerkzeug und/oder als ein Optimierungswerkzeug. Das Datenbankmodul entwickelt Szenarien, wenn eine oder mehrere, für beide Arbeitsprojekte erforderliche Personen einmal dem einen und einmal dem anderen Arbeitsprojekt zugeordnet werden und konsequenterweise dem jeweils anderen Arbeitsprojekt fehlen. Das Datenbankmodul kann an dieser Stelle bereits ein Optimierungswerkzeug bilden, das die an sich für beide Arbeitsprojekte erforderlichen Personen derart den Arbeitsprojekten zuordnet, dass beide Arbeitsprojekte möglichst optimal durchführbar sind. Es versteht sich, dass die vorgenommenen Maßnahmen auch für mehr als zwei Arbeitsprojekte möglich sind.

Die nachfolgende Maßnahme dient zur Datenpflege der Ist-Kompetenzwerte. Sie kann prinzipiell aber auch für die Soll-Kompetenzwerte angewendet werden. Zweckmäßigerweise weist ein erfindungsgemäßes Datenbankmodul Ausgabemittel zur Ausgabe einer Eingabeaufforderung zur Eingabe modifizierter Ist-Kompetenzwerte in Abhängigkeit von zumindest einer Bedingung auf. Beispielsweise kann in vorbestimmten zeitlichen Abständen die Eingabeaufforderung ausgegeben werden. Ferner wird die Eingabeaufforderung beispielsweise nach der Durchführung einer vorgenannten Qualifizierungsmaßnahmen generiert. Auch wenn eine Person einer anderen Funktion zugeordnet wird, beispielsweise einen anderen Arbeitsplatz in dem Unternehmen einnimmt, sind die Ist-Kompetenzwerte zu modifizieren, wozu das erfindungsgemäße Datenbankmodul zweckmäßigerweise auffordert.

Vorzugsweise weist das erfindungsgemäße Datenbankmodul Prüfmittel zur Zugangsprüfung bei der Eingabe der Ist-Kompetenzwerte und/oder der Soll-Kompetenzwerte auf. Dadurch wird sichergestellt, dass nur berechtigte Personen die Kompetenzwerte modifizieren.

Eine weitere, besonders bevorzugte Variante der Erfindung sieht vor, dass Freigabemittel zur Freigabe und anschließenden Übernahme eingegebener Ist-Kompetenzwerte und/oder Soll-Kompetenzwerte vorhanden sind. Die entsprechenden Kompetenzwerte werden beispielsweise durch die Person, der die Kompetenzwerte zugeordnet sind, selbst eingegeben. Beispielsweise geben Mitarbeiter des Unternehmens ihre jeweiligen Kompetenzwerte selbst ein. Die Kompetenzwerte werden zwischengespeichert. Nach Überprüfung der Kompetenzwerte durch eine dazu berechtigte Person, beispielsweise Vorgesetzte der Mitarbeiter, werden die Kompetenzwerte von dem Datenbankmodul übernommen.

Nachfolgend werden Ausführungsbeispiele der Erfindung anhand der Zeichnung näher erläutert. Es zeigen:
- Figur 1: eine Rechneranordnung mit einem erfindungsgemäßen Datenbankmodul,
- Figur 2: einen schematisiert dargestellten Funktionsablauf des Datenbankmoduls gemäß Figur 1,
- Figur 3: ein Eingabemenü des Datenbankmoduls gemäß Figuren 1 und 2, und
- Figur 4: eine schematisch dargestellte Simulation, die beispielsweise von dem Datenbankmodul gemäß Figuren 1 und 2 durchgeführt ist.

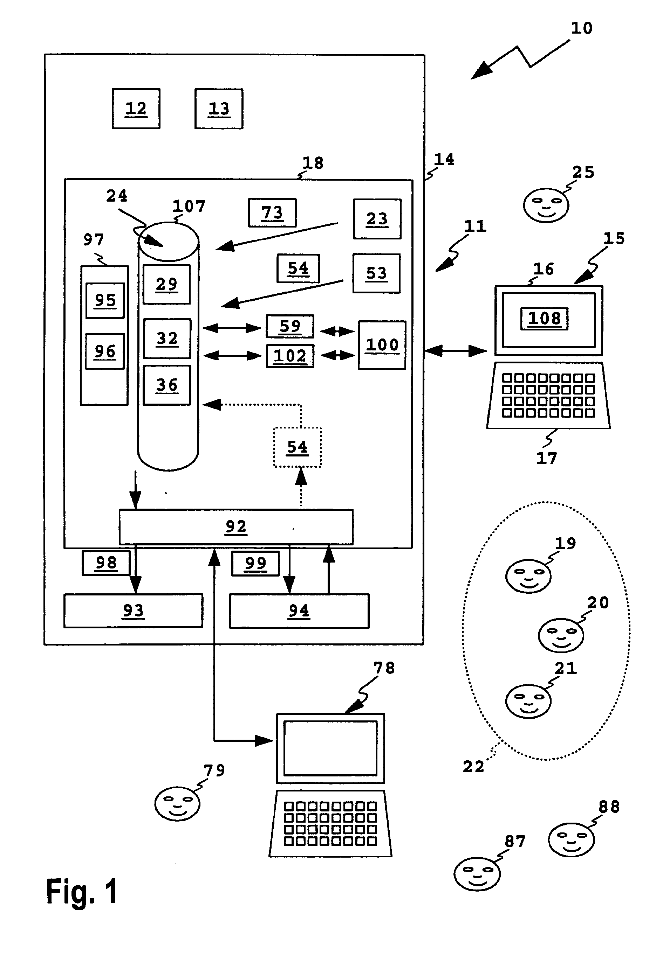

In Figur 1 ist eine insgesamt mit der Bezugsziffer 10 versehene Rechneranordnung dargestellt. Die Rechneranordnung 10 kann einen oder mehrere, vorzugsweise miteinander vernetzte Rechner enthalten. Aus Gründen der Vereinfachung enthält sie beim Ausführungsbeispiel lediglich Rechner 11 und 78, z.B. Personalcomputer. Der Rechner 11 enthält einen oder mehrere Prozessoren 12, Speichermittel 13, z.B. RAM und ROM (Random Access und Read Only Memory), Festplattenlaufwerke oder dergleichen, die in einem Gehäuse 14 angeordnet sind, sowie Ein-/Ausgabemittel 15, z.B. ein Display 16 sowie eine Tastatur 17. Der Prozessor 12 kann Programmcode von Programmmodulen, z.B. von einem Datenbankmodul 18, die in den Speichermitteln 13 gespeichert sind, ausführen.

Das Datenbankmodul 18 dient in erfindungsgemäßer Weise zur Ermittlung von Personaldaten. Mit dem Datenbankmodul 18 sind erfindungsgemäße Verfahren durchführbar.

Das Datenbankmodul 18 dient zur Ermittlung von Personaldaten von Personen 19, 20, 21, und 87, 88 die bei einem Unternehmen 22 beschäftigt sind oder in Zukunft beschäftigt werden sollen. Das Unternehmen 22 stellt beispielsweise Pneumatikkomponenten her. Die Personen 19 bis 21, sowie weitere, nicht dargestellte Personen, sind beispielsweise mit der Produktion und dem Vertrieb der Druckluftkomponenten, mit Verwaltungsaufgaben mit Personalmanagementfunktionen oder dergleichen befasst.

Die bei den Unternehmen 22 beschäftigten Personen 19 bis 21 weisen unterschiedliche Kompetenzen auf, beispielsweise unterschiedliche Ausbildungs- und Studiengänge, Sprachkenntnisse, Kommunikationsfähigkeit, Führungsfähigkeit, Kundenorientierung oder dergleichen auf. Es wäre zwar prinzipiell möglich, derartige Daten in schriftlicher Form zu archivieren, beispielsweise in Form von Karteikarten oder dergleichen. Die Pflege derartiger Datenbestände, die Aktualisierung, der Zugriff zu den Daten und dergleichen ist jedoch sehr schwierig, so dass derartige Daten für das Unternehmen 22 nur sehr begrenzt nutzbar sind. Hier setzt die Erfindung ein.

Das Datenbankmodul 18 ermöglicht eine qualifizierte und kategorisiere Erfassung von Personaldaten 24 der Personen 19 bis 21 und bietet vielfältige Nutzungsmöglichkeiten der Personaldaten 24 an, was im Folgenden durch eine Funktionsbeschreibung des Datenbankmoduls 18 deutlich wird.

Mit Hilfe von Erfassungsmitteln 23 sind die Personaldaten 24 der Personen 19, 20, 21 erfassbar. Die Personaldaten 24 werden von einem Bediener 25 des Rechners 11, beispielsweise an der Tastatur 17 eingegeben. Hierbei zeigen die Erfassungsmittel 23 an dem Display 16 Erfassungsmasken, beispielsweise in Form eines Menüs 26 an. Das Menü 26 wird beispielsweise durch Ausgabemittel 100 erzeugt, bei denen es sich z.B. um eine Software-Funktion zur Erzeugung einer grafischen Bedienoberfläche handelt.

Der Bediener 25 gibt in durch die Erfassungsmittel 23 strukturierter Form die Personaldaten 24 für die Personen 19 bis 21 ein. Beispielsweise erfasst das Datenbankmodul 18 für die Person 19 Ist-Kompetenzwerte 27, 28 eines Ist-Kompetenzprofils 29, für die Person 20 Ist-Kompetenzwerte 30, 31 eines Ist-Kompetenzprofils 32 sowie für die Person 21 Ist-Kompetenzwerte 33, 34 eines Ist-Kompetenzprofils 35. Die Ist-Kompetenzprofile 29, 32, 35 enthalten weitere, aus Vereinfachungsgründen nicht dargestellte Ist-Kompetenzwerte. Das Datenbankmodul 18 speichert die Personaldaten 24 in einem Speicherbereich 107.

Die Ist-Kompetenzwerte der Profile 29, 32, 35 sind Kompetenzkategorien oder Kompetenzgruppen zugeordnet. Als besonders vorteilhaft hat sich eine Kategorisierung in die eingangs genannten fünf Kategorien erwiesen, nämlich fachliche, methodische, soziale, persönliche und unternehmerische Kompetenz der Personen 19 bis 21. Die Ist-Kompetenzwerte 27, 30, 33 betreffen beispielsweise die Ausbildung der jeweiligen Person 19, 20, 21 und somit eine fachliche Kompetenz, die als Kompetenzkategorie 36 bezeichnet ist. Die Ist-Kompetenzwerte 28, 31, 34 betreffen beispielsweise die Konzentrationsfähigkeit der Personen 19, 20, 21 und somit eine persönliche Kompetenz. Persönliche Kompetenzen sind der Kompetenzkategorie 37 zugeordnet.

Ferner enthalten die Ist-Kompetenzprofile 29, 32, 35 beispielsweise auch Ist-Kompetenzwerte betreffend die unternehmerische Kompetenz der Personen 19 - 21. Die unternehmerischen Kompetenzen sind einer Kompetenzkategorie 38 zugeordnet. Beispielsweise ist ein Ist-Kompetenzwert 39, der die Identifikation der Person 19 mit dem Unternehmen 22 oder das strategische Denken und Handeln der Person 19 beschreibt, der Kompetenzkategorie 38 zugeordnet.

Das Menü 26, das beispielsweise an einer grafischen Bedienoberfläche an den Ein-/Ausgabemitteln 15 angezeigt wird, ermöglicht die Eingabe der Ist-Kompetenzwerte, 27, 28, 30, 31, 33, 34, 39 sowie weiterer, nicht dargestellter Kompetenzwerte. Das Menü 26 bietet einem Bediener 25 Auswahllisten mit vorbestimmten Kompetenzwertstufen zur Eingabe der Kompetenzwerte an. Beispielsweise können für den Ist-Kompetenzwert 27 die Stufen 40 bis 43 aus einer Auswahlliste 101 ausgewählt werden, wobei die Stufe 40 beispielsweise einen Berufseinsteiger, die Stufe 41 einen Kenner mit fachspezifischer Berufsausbildung, die Stufe 42 einen Hochschulabgänger und die Stufe 43 einen Spezialisten mit Hochschulausbildung und mehrjähriger spezifischer Berufserfahrung betrifft. Es versteht sich, dass weitere, feiner detailliertere Abstufungen ohne weiteres möglich sind. Die Erfassungsmittel 23 erfassen welche der Stufen 40 bis 43 der Bediener 25 z.B. mit einer Computer-Maus markiert und ordnet die entsprechende Kompetenzstufe dem Ist-Kompetenzwert 27 bei der Übernahme in die Personaldaten 24 zu.

Der Ist-Kompetenzwert 28 kann sehr fein gestuft eingegeben werden. Das Menü 26 zeigt dazu eine Art Schieberegler 44 an, der zwischen einer Stellung 45 und einer Stellung 46 verschoben werden kann. Bei der Stellung 45 ordnen die Erfassungsmittel 23 dem Ist-Kompetenzwert 28 z.B. einen kleinen Zahlenwert zu, bei der Stellung 46 einen großen Zahlenwert. Bei Zwischenstellungen des Schiebereglers 44 ordnen die Erfassungsmittel 23 dem Ist-Kompetenzwert 28 entsprechende Zwischenwerte zu, wobei feine Stufungen, gegebenenfalls kontinuierliche Zwischenwerte möglich sind. Der Schieberegler 44 ist beispielsweise mit der Tastatur 27, einer Computermaus oder dergleichen bedienbar.

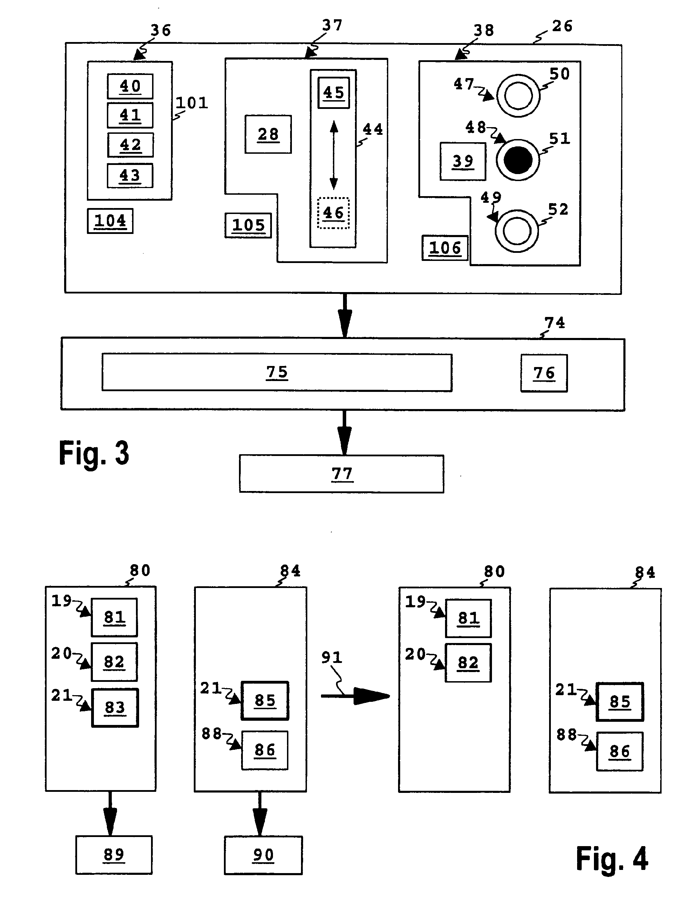

Für den Ist-Kompetenzwert 39 sind Kompetenzstufen 47 bis 49 auswählbar, in dem beispielsweise mit einer Computermaus des Rechners 11 den Stufen 47 bis 49 zugeordnete Auswahlfelder 50, 51, 52 ausgewählt werden. Lediglich eines der Auswahlfelder 50 bis 52 ist auswählbar. In Figur 3 ist beispielsweise das der Stufe 48 zugeordnete Auswahlfeld 51 markiert. In Abhängigkeit vom jeweils ausgewählten Auswahlfeld 50, 51, 52 ordnen die Erfassungsmittel 23 dem Ist-Kompetenzwert 39 einen entsprechenden Zahlenwert zu, der in den Personaldaten 24 vermerkt wird. Die Stufen 47, 48, 49 entsprechen beispielsweise Zahlenwerten 25, 75 und 125. Der Zahlenwert 25 bedeutet beispielsweise "nicht vorhanden", der Zahlenwert 75 "im wesentlichen erfüllt" und der Zahlenwert 125 "übertroffen". Es versteht sich, dass auch Zwischenstufen, beispielsweise mit Zahlenwerten 50 und 100 (= "wenig Erfahrung", "noch nicht erfüllt" und "voll erfüllt") möglich sind.

Die Ist-Kompetenzwerte 30, 31, 33, 34 sowie weitere Ist-Kompetenzwerte können ebenfalls über das Menü 26 erfasst werden.

Die Ist-Kompetenzwerte 27, 28, 30, 31, 33, 34 sind beispielsweise als eine Art Zahlencode oder Index, den man auch als Qualifikationsindex bezeichnen kann, in den Personaldaten 24 vermerkt. Dabei steht beispielsweise eine vorangestellte erste Ziffer des jeweiligen Zahlencodes mit Zahlenwerten von 1 bis 5 für die Kompetenzkategorie 36 - 38 und zwei weitere, nicht dargestellte Kompetenzkategorien. Danach können beispielsweise zwei oder drei weitere Ziffern folgen, die eine Unterkategorie der vorgenannten Kompetenzkategorien bezeichnen, beispielsweise eine Unterkategorie der Kompetenzkategorie 36. Innerhalb der Teilkompetenzkategorie können Zahlenwerte für die tatsächlichen Kompetenzwerte vorgesehen sein, beispielsweise die Stufen 40 bis 43 für die Ist-Kompetenzwerte 27, 30 und 33. Die Zahlenwerte für die Kompetenzkategorie und die Teilkompetenzkategorie sind sozusagen Identifizierer zum Auffinden eines Kompetenzwertes, der vorzugsweise vorbestimmte Kompetenzstufen annehmen kann. Es versteht sich, dass auch andere Methoden zur Identifizierung und Qualifizierung eines Kompetenzwertes innerhalb der Personaldaten 24, die vorzugsweise in der Form einer Datenbank organisiert sind, möglich sind.

Die Personaldaten 24 können durch das Datenbankmodul 18 in vielseitiger Weise nutzbringend ausgewertet werden. Beispielsweise wird innerhalb des Unternehmens 22 eine Person für eine vorbestimmte Tätigkeit gesucht. Beispielsweise soll ein bestimmtes Produkt entwickelt werden, eine Führungsposition besetzt werden, ein Montagearbeitsplatz besetzt werden oder dergleichen.

Erfassungsmittel 53 erfassen hierfür eines oder mehrere Soll-Kompetenzprofile 54. Anhand des Soll-Kompetenzprofils 54 soll beispielsweise eine Person für eine Fachführungsfunktion ermittelt werden. Dazu fragen die Erfassungsmittel 53 Soll-Kompetenzwerte 55, 56 z.B. an den Ein-/Ausgabemitteln 15 ab. Hierfür ist beispielsweise ein Abfragemenü 108 in der Art des Menüs 26 vorgesehen. Die Soll-Kompetenzwerte 55, 56 entsprechen beispielsweise den Ist-Kompetenzwerten 27, 28 bzw. 30, 31 und 33, 34. Das Soll-Kompetenzprofil 54 kann wie die Ist-Kompetenzprofile 29, 32, 35 weitere Soll-Kompetenzwerte enthalten.

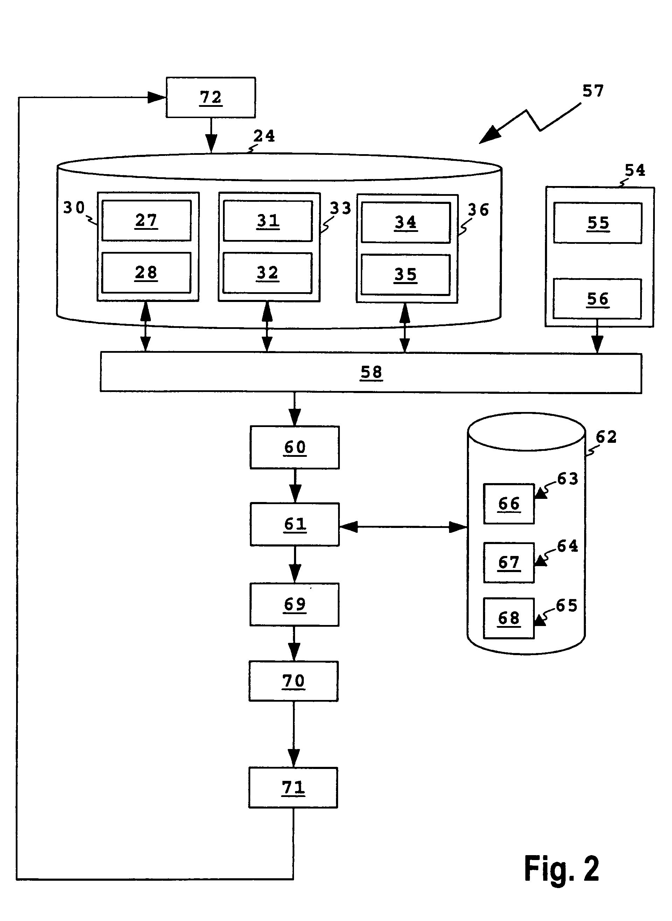

Eine erfindungsgemäße Anwendung des Soll-Kompetenzprofils 54 ist in Figur 2 durch ein Diagramm 57 schematisch dargestellt.

In einem Schritt 58 erfasst das Datenbankmodul 18 das Soll-Kompetenzprofil 54. Das Soll-Kompetenzprofil 54 ist eine Art Suchmaske, mit der das Datenbankmodul 18 die Personaldaten 24 durchsucht. Die Vergleichsmittel 59 ermitteln beispielsweise Differenzwerte zwischen den Ist-Kompetenzwerten der Ist-Kompetenzprofile 29, 32, 35 und den Soll-Kompetenzwerten des Soll-Kompetenzprofils 54. Bei einer derartigen Differenzwertbildung ermitteln die Vergleichsmittel 59 beispielsweise, dass die Differenzwerte zwischen den Ist-Kompetenzwerten 31, 32 und den Soll-Kompetenzwerten 55, 56 am geringsten sind.

In einem Schritt 60 zeigt das Datenbankmodul 18 am Display 16 an, dass die dem Ist-Kompetenzprofil zugeordnete Person 20 für die zu besetzende Stelle in dem Unternehmen 22 die am besten geeignete Zielperson ist.

Es ist auch möglich, dass der Bediener 25 am Menü Gewichtungsfaktoren 104, 105 und 106 bei der Auswahl einer geeigneten Person vorgeben kann. Beispielsweise kann er die soziale Kompetenz bei der Besetzung einer Führungsperson höher gewichten als die fachliche Kompetenz. In entsprechender Weise wählen die Vergleichsmittel 59 ein geeignetes Ist-Kompetenzprofil aus den Personaldaten 24 aus. Dabei wird beispielsweise eine Differenz zwischen dem Soll-Kompetenzwert 55 und dem Ist-Kompetenzwerten 27, 31, 34 geringer gewichtet als eine Differenz zwischen dem Soll-Kompetenzwert 56 und den Ist-Kompetenzwerten 28, 32 oder 35.

Möglicherweise erfüllt die Person 20 bereits alle Voraussetzungen, die durch das Soll-Kompetenzprofil 52 gefordert sind. In der Praxis gibt es jedoch häufig Abweichungen, das heißt, dass eine Person zwar viele, nicht jedoch alle Anforderungen eines Soll-Kompetenzprofils erfüllt. Ein Kompetenzdefizit kann unter der Mitwirkung des Datenbankmoduls 18 in einfacher Weise verringert werden.

In einem Schritt 61 ermittelt das Datenbankmodul 18 eine geeignete Qualifizierungsmaßnahme anhand von Qualifizierungsdaten 62. Beispielsweise soll eine Differenz zwischen dem Ist-Kompetenzwert 31 und dem Soll-Kompetenzwert 56 vermindert werden. Die Qualifizierungsdaten 62 enthalten zu den Qualifizierungsmaßnahmen 62 bis 65 Kompetenzverbesserungswerte oder Qualifizierungswerte 66, 67, 68, wobei beispielsweise die Kompetenzverbesserungswerte 56, 57 definieren, in welchem Umfang eine Differenz zwischen dem Ist-Kompetenzwert 31 und dem Soll-Kompetenzwert 56 verringert werden kann. Der Kompetenzverbesserungswert 68 definiert beispielsweise, in welchem Umfang eine Abweichung zwischen dem Soll-Kompetenzwert 55 und einem der Ist-Kompetenzwerte 27, 30, 33 verringert werden kann.

Die Person 20 weist eine Abweichung zwischen dem Soll-Kompetenzwert 56 und dem Ist-Kompetenzwert 31 auf. Dementsprechend zeigt das Datenbankmodul 18 in einem Schritt 69 die Qualifizierungsmaßnahmen 63, 64 am Display 16 an. Der Bediener 25 kann die entsprechende Qualifizierungsmaßnahme 63 oder 64 für die Person 20 aktivieren, wobei beispielsweise auf elektronischem Wege die Qualifizierungsmaßnahme bestellt wird und die Person 20 über die geplante Qualifizierungsmaßnahme benachrichtigt wird. Bei dem Schritt 69 können auch weitere, den Qualifizierungsmaßnahmen 63, 64 zugeordnete Werte angezeigt werden, beispielsweise die Kosten der jeweiligen Qualifizierungsmaßnahme 63, 64. Es ist möglich, dass in dem Schritt 69 bereits die kostengünstigste Qualifizierungsmaßnahme 63 oder 64 ausgewählt und angezeigt wird.

In einem Schritt 70 wird ein Timer gestartet, der z.B. der Zeitdauer der ausgewählten Qualifizierungsmaßnahme 63, 64 entspricht. Nachdem die ausgewählte Qualifizierungsmaßnahme 63 oder 64 durchgeführt ist, läuft der Timer des Schrittes 70 ab und das Datenbankmodul 18 gibt in einem Schritt 71 eine Aufforderung am Display 16 zur Pflege der Personaldaten 24 aus.

In einem Schritt 72 wird beispielsweise für die Person 20 das Menü 26 angezeigt, so dass der durch die ausgewählte Qualifizierungsmaßnahme 63, 64 verbesserte Ist-Kompetenzwert 31 in die Personaldaten 24 eingetragen werden kann.

Im Grunde genommen können Ist-Kompetenzwerte der Personaldaten 24 durch jede zu einer Beurteilung der bei dem Unternehmen 22 beschäftigten Personen 19 bis 21 befähigte Person angegeben werden. Vorzugsweise gibt ein Mitarbeiter im Human Recourcen Management, eine Führungskraft oder dergleichen aktualisierte Ist-Kompetenzwerte ein. Gegen eine missbräuchliche Eingabe von Ist-Kompetenzwerten sind Prüfmittel 73 zur Zugangsprüfung bei der Eingabe von Ist-Kompetenzwerten und Soll-Kompetenzwerten zu den Personaldaten 24 vorgesehen. Nachdem an dem Menü 26 beispielsweise aktualisierte Ist-Kompetenzwerte eingegeben worden sind, geben die Prüfmittel 73 eine Eingabemaske 74 an den Ein-/Ausgabemitteln 15 aus. Zur Übernahme modifizierter Ist-Kompetenzwerte von dem Menü 26 zu den Personaldaten 24 ist an einem Eingabefeld 75 der Eingabemaske 74 ein Zugangscode, beispielsweise an der Tastatur 17, einzugeben und sodann eine grafisch dargestellte Bestätigungstaste 76 zu betätigen. Dann übernimmt das Datenbankmodul 18 in einem Schritt 77 die modifizierten Ist-Kompetenzwerte in die Personaldaten 24.

Es ist auch möglich, dass die Person, die durch die jeweiligen Ist-Kompetenzwerte charakterisiert ist, ihre Ist-Kompetenzwerte selbst modifiziert. Beispielsweise könnte die Person 20 nach der Durchführung der Qualifizierungsmaßnahme 63 oder 64 den Ist-Kompetenzwert 31 an dem Eingabemenü 26 modifizieren. Allerdings könnte die Person 20 möglicherweise einen nicht zutreffenden Ist-Kompetenzwert 31 eingeben. Zur Vermeidung einer derartigen Fehlbedienung zeigt das Datenbankmodul 18 beispielsweise den modifizierten Ist-Kompetenzwert 31 sowie die Eingabemaske 74 an dem mit dem Rechner 11 z.B. über ein Netzwerk verbundenen Rechner 78 an. Eine Prüfperson 79 gibt am Eingabefeld 75 einen Freigabecode ein. Dann übernimmt das Datenbankmodul 18 im Schritt 77 den modifizierten Ist-Kompetenzwert 31 in die Personaldaten 24. Die Prüfmittel 73 sind vorliegend sozusagen auch Freigabemittel.

Das Datenbankmodul 18 ermöglicht auf effiziente Weise die Resourcenplanung für vorhandene oder neu zu beginnende Arbeitsprojekte des Unternehmens 22. Beispielsweise sind in einem ersten Arbeitsprojekt 80 die Personen 19, 20, 21 beschäftigt. Das Arbeitsprojekt 80 ist durch Soll-Kompetenzprofile 81, 82, 83 charakterisiert, die den Personen 19, 20, 21 zugeordnet und z.B. durch die Erfassungsmittel 53 erfassbar sind. Mit Hilfe der Soll-Kompetenzprofile 81 bis 83 ermittelt das Datenbankmodul 18 z.B. mit den Vergleichsmitteln 59 die Personen 19, 20, 21 aus den Personaldaten 24 durch Vergleich mit Ist-Kompetenzwerten, z.B. so wie oben beschrieben. Das Arbeitsprojekt 80 betrifft beispielsweise die Fertigung einer ersten Variante von pneumatischen Arbeitszylindern.

Nun soll eine zweite Variante von Arbeitszylindern entwickelt und gefertigt werden, wozu ein zweites Arbeitsprojekt 84 geplant wird. Die für das zweite Arbeitsprojekt 84 benötigten Personen sind bei dem Datenbankmodul 18 durch Soll-Kompetenzprofile 85, 86, z.B. durch Eingabe von Soll-Kompetenzwerten an einem Eingabe-Menü in der Art des Menüs 26 definiert. Anhand des Soll-Kompetenzprofils 85 ermittelt das Datenmodul 18 z.B. mit den Vergleichsmitteln 59, dass die Person 21 für das Arbeitsprojekte 84 geeignet ist. Die Person 21 ist allerdings bereits im ersten Arbeitsprojekt 80 beschäftigt. Die Personen 19 und 20 des ersten Arbeitsprojektes 80 hingegen werden für das zweite Arbeitsprojekt 84 nicht benötigt.

Die durch das Soll-Kompetenzprofil 86 definierte Person ist in dem Unternehmen 22 nicht verfügbar. Beispielsweise erzeugt das Datenbankmodul 18 eine automatisierte Stellenausschreibung zur Akquirierung der durch das Soll-Kompetenzprofil 86 definierten Person. Auf die Stellenausschreibung, die vom Datenbankmodul 18 z.B. über das Internet auf der Homepage des Unternehmens angezeigt wird, per E-Mail an das Arbeitsamt, Personalagenturen versandt wird oder dergleichen, bewerben sich Personen 87, 88 bei dem Unternehmen 22. Das Datenbankmodul 18 erfasst die Ist-Kompetenzwerte der Personen 87, 88 auf die oben beschriebene Weise und übernimmt die Ist-Kompetenzwerte in die Personaldaten 24. Anhand des Soll-Kompetenzprofils 86 ermitteln die Vergleichsmittel 59, dass die Ist-Kompetenzwerte der Person 88 am besten mit dem Soll-Kompetenzprofil 86 harmonieren. Die Person 88 wird bei dem Unternehmen 22 eingestellt. Prinzipiell wären somit die für das Arbeitsprojekt 84 benötigten Personen ermittelt. Allerdings besteht noch die Konfliktsituation, dass die Person 21 sowohl für das erste als auch für das zweite Arbeitsprojekt 80, 84 benötigt wird.

Simulationsmittel 102 des Datenbankmoduls 18 simulieren anhand der den Personen 19, 20, 21 bzw. 88 zugeordneten Ist-Kompetenzwerte, welche Auswirkungen die Zuordnung der Person 21 zu dem ersten Arbeitsprojekt 80 oder zu dem zweiten Arbeitsprojekt 84 hat. Die Simulationsmittel 102 geben Auswirkungsdaten 89, 90 am Display 16 aus. Die Auswirkungsdaten 89, 90 enthalten beispielsweise jeweils Angaben darüber, welche Stückzahlen des ersten oder des zweiten pneumatischen Arbeitszylinders, welche Erlöse oder dergleichen jeweils mit und ohne Mitwirkung der Person 21 erzielbar sind.

Der Bediener 25 kann an den Ein-/Ausgabemitteln 15 ein Optimierungskriterium, z.B. "maximaler Gewinn" angeben, anhand dessen das Datenbankmodul 18 die Person 21 dem ersten oder zweiten Arbeitsprojekt 80, 84 optimal zuordnet. Vorliegend wählt das Datenbankmodul 18 eine Variante aus, bei der die Person 21 dem zweiten Arbeitsprojekt 84 zugeordnet wird. In Figur 4 ist die Zuordnung der Person 21 zum Arbeitsprojekt 84 durch einen Pfeil 91 schematisch angedeutet.

Es ist auch möglich, dass das Datenbankmodul 18 ein Auswahlmenü am Display 16 anzeigt und beispielsweise der Bediener 25 die sowohl für das erste als auch für das zweite Arbeitsprojekt 80, 84 erforderliche Person 81 dem ersten oder dem zweiten Arbeitsprojekt 80, 84 zuordnet.

Bei den obigen Beispielen wurden die Ist-Kompetenzwerte und die Soll-Kompetenzwerte an den Ein-/Ausgabemitteln 15 angegeben. Über eine Schnittstelle 92 ist das Datenbankmodul 18 mit einem betriebswirtschaftlichen Softwaremodul 93 sowie mit einem Unternehmenssteuerungs-Softwaremodul 94 koppelbar. Das Datenbankmodul 18 ermittelt anhand der Ist-Kompetenzwerte der Ist-Kompetenzprofile 29, 32, 35 beispielsweise einen monetären Wert, den die Personen 19, 20, 21 für das Unternehmen 2 haben. Beispielsweise multiplizieren Bewertungsmittel 103 des Datenbankmoduls 18 die Ist-Kompetenzwerte 27, 30, 33 mit einem Bewertungsfaktor 95 und die Ist-Kompetenzwerte 28, 31, 34 mit einem Bewertungsfaktor 96 eines Bewertungsprofils 97, um eine Bewertungszahl bzw. ein Bewertungszahlenfeld 98 zu ermitteln. Sodann übermittelt das Datenbankmodul 18 die Bewertungszahlen 98 dem betriebswirtschaftlichen Softwaremodul 93 über die Schnittstelle 92. Das betriebswirtschaftliche Softwaremodul 93 bezieht die Bewertungszahlen 98 beispielsweise in eine Bilanz des Unternehmens 22 ein.

Das Unternehmessteuerungs-Softwaremodul 94 basiert beispielsweise auf der sogenannten Balanced Scorecards (BSC). BSC's sind Controllinginstrumente bzw. Unternehmenslenkungsinstrumente die von Robert S. Kaplan und David B. Norton entwickelt worden sind. Beispielsweise übermitteln die Bewertungsmittel 103 des Datenbankmoduls 18 Kennzahlen 99, die anhand der Ist-Kompetenzprofile 29, 32, 35 ermittelt worden sind, an das Softwaremodul 94. In umgekehrter Richtung kann auch das Softwaremodul 94 Soll-Kompetenzprofile, z.B. das Soll-Kompetenzprofil 54 oder die Soll-Kompetenzprofile 85, 86 anhand von BSC-Kennzahlen ermitteln und über die Schnittstelle 92 dem Datenbankmodul 18 übermitteln. Es ist auch möglich, dass das Softwaremodul 94 BSC-Kennzahlen übermittelt, aus denen das Datenbankmodul 18 Soll-Kompetenzprofile bildet.

Die Erfassungsmittel 23, 53, die Vergleichsmittel 59, die Simulationsmittel 102 und die Prüfmittel 73 sind beispielsweise Softwarefunktionen.

## Patentansprüche

1. Datenbankmodul zur Ermittlung von Personaldaten mit:
- Mitteln (23) zur Erfassung von Ist-Kompetenzwerten (27,28,30,31,33,34) von bei einem Unternehmen (22) beschäftigten oder zu beschäftigenden Personen (19-21, 88, 87) zur Bildung von Ist-Kompetenzprofilen (29, 32, 35),
- Mitteln (53) zur Erfassung von Soll-Kompetenzwerten (55, 56) für mindestens eine Person (19-21, 88, 87) zur Bildung eines Soll-Kompetenzprofils (54), und
- Vergleichsmitteln (59) zum Veranlassen zumindest einer Maßnahme anhand eines Vergleichs der Ist-Kompetenzwerte (27,28,30,31,33,34) und der Soll-Kompetenzwerte (55, 56).

2. Datenbankmodul nach Anspruch 1, **gekennzeichnet durch** Mittel (26) zur Auswahl der Ist-Kompetenzwerte (27,28,30,31,33,34) und/oder der Soll-Kompetenzwerte (55, 56) aus einer Auswahlliste (101) mit vorbestimmten Kompetenzwert-Stufen (40 - 43).

3. Datenbankmodul nach Anspruch 1 oder 2, **gekennzeichnet durch** Mittel (26) zum Gruppieren der Ist-Kompetenzwerte (27,28,30,31,33,34) und/oder der Soll-Kompetenzwerte (55, 56) in Kompetenzkategorien(36 - 38).

4. Datenbankmodul nach einem der vorhergehenden Ansprüche, **gekennzeichnet durch** Mittel (26) zum Versehen der Ist-Kompetenzwerte (27,28,30,31,33,34) und/oder der Soll-Kompetenzwerte (55, 56) mit Gewichtungsfaktoren (104, 105, 106), insbesondere in Abhängigkeit von den Kompetenzkategorien.

5. Datenbankmodul nach einem der vorhergehenden Ansprüche, **dadurch gekennzeichnet, dass** die Vergleichsmittel (59) bei dem Vergleich der Ist-Kompetenzwerte (27,28,30,31,33,34) und der Soll-Kompetenzwerte (55, 56) Differenzwerte anhand der Ist-Kompetenzwerte (27,28,30,31,33,34) und der Soll-Kompetenzwerte (55, 56) ermitteln.

6. Datenbankmodul nach einem der vorhergehenden Ansprüche, **dadurch gekennzeichnet, dass** die mindestens eine Maßnahme die Ermittlung einer Zielperson (20) umfasst.

7. Datenbankmodul nach einem der vorhergehenden Ansprüche, **dadurch gekennzeichnet, dass** die mindestens eine Maßnahme eine Ermittlung einer Qualifizierungsmaßnahme (63-65) für eine Person (19-21, 88, 87) umfasst, wobei die Qualifizierungsmaßnahme (63-65) zur Verminderung einer Abweichung zwischen den Ist-Kompetenzwerten (27,28,30,31,33,34) und den Soll-Kompetenzwerten (55, 56) der Person (19-21, 88, 87) vorgesehen ist.

8. Datenbankmodul nach einem der vorhergehenden Ansprüche, **dadurch gekennzeichnet, dass** es Mittel (53, 59, 102) zur Erfassung von Soll-Kompetenzwerten (55, 56) mehrerer Personen (19-21, 88, 87) einer ersten Personengruppe zur Durchführung eines ersten Arbeitsprojekts (80), und Mittel (59) zur Ermittlung von für das erste Arbeitsprojekt (80) in dem Unternehmen (22) verfügbaren Personen anhand der Ist-Kompetenzwerte (27,28,30,31,33,34) aufweist.

9. Datenbankmodul nach Anspruch 8, **dadurch gekennzeichnet, dass** die Mittel (53, 59, 102) zur Erfassung von Soll-Kompetenzwerten (55, 56) mehrerer Personen (19-21, 88, 87) einer zweiten Personengruppe zur Durchführung eines zweiten Arbeitsprojekts (84), und zur Ermittlung von für das zweite Arbeitsprojekt (84) in dem Unternehmen (22) verfügbaren Personen (19-21, 88, 87) anhand der Ist-Kompetenzwerte (27,28,30,31,33,34), und zur Ermittlung von mindestens einer sowohl für das erste als auch das zweite Arbeitsprojekt erforderlichen, in dem Unternehmen (22) jedoch nur einmal verfügbaren Person (21) ausgestaltet sind.

10. Datenbankmodul nach Anspruch 9, **dadurch gekennzeichnet, dass** die Mittel (53, 59, 102) zur Ermittlung der Auswirkung auf das erste Arbeitsprojekt bei Auswahl der mindestens einen für das erste und das zweite Arbeitsprojekt erforderlichen Person (21) für das zweite Arbeitsprojekt und/oder umgekehrt ausgestaltet sind.

11. Datenbankmodul nach Anspruch 9, **dadurch gekennzeichnet, dass** die Mittel (53, 59, 102) zur Auswahl der mindestens einen für das erste und das zweite Arbeitsprojekt erforderlichen Person (21) anhand mindestens eines Auswahlkriteriums für das dasjenige erste oder das zweite Arbeitsprojekt ausgestaltet sind, bei dem die Entnahme der Person eine größere Auswirkung hat

12. Datenbankmodul nach einem der vorhergehenden Ansprüche, **gekennzeichnet durch** Ausgabemittel (100) zur Ausgabe einer Eingabeaufforderung zur Eingabe modifizierter Ist-Kompetenzwerte (27,28,30,31,33,34) in Abhängigkeit von zumindest einer Bedingung.

13. Datenbankmodul nach einem der vorhergehenden Ansprüche, **gekennzeichnet durch** Prüfmittel (74) zur Zugangsprüfung bei der Eingabe der Ist-Kompetenzwerte (27,28,30,31,33,34) und/oder der Soll-Kompetenzwerte (55, 56).

14. Datenbankmodul nach einem der vorhergehenden Ansprüche, **gekennzeichnet durch** Freigabemittel (74) zur Freigabe und anschließende Übernahme eingegebener Ist-Kompetenzwerte (27,28,30,31,33,34) und/oder Soll-Kompetenzwerte (55, 56).

15. Datenbankmodul zur Ermittlung von Personaldaten mit:
- Erfassungsmitteln (23) zur Erfassung von Ist-Kompetenzwerten (27,28,30,31,33,34) von bei einem Unternehmen (22) beschäftigten Personen (19-21, 88, 87) zur Bildung von Ist-Kompetenzprofilen (29, 32, 35),
- Mitteln (103) zur Ermittlung mindestens einer finanziellen Bewertungszahl (98) für mindestens eine anhand der Ist-Kompetenzwerte (27,28,30,31,33,34) charakterisierten Person (19-21, 88, 87) durch Multiplikation mindestens eines Ist-Kompetenzwerts (27,28,30,31,33,34) mit einem Bewertungsfaktor (95, 96), und
- Ausgabemitteln (92) zur Ausgabe der mindestens einen Bewertungszahl, insbesondere an ein betriebswirtschaftliches Softwaremodul (93).

16. Datenbankmodul nach einem der vorhergehenden Ansprüche, **dadurch gekennzeichnet, dass** es Programmcode enthält, der durch einen Prozessor eines Rechners (11), insbesondere eines Personal Computers, ausführbar ist.

17. Rechneranordnung und/oder Speichermedium mit einem Datenbankmodul (18) nach Anspruch 16.

18. Verfahren zur Ermittlung von Personaldaten mit den Schritten:
- Erfassung von Ist-Kompetenzwerten (27,28,30,31,33,34) von bei einem Unternehmen (22) beschäftigten oder zu beschäftigenden Personen (19-21, 88, 87) zur Bildung von Ist-Kompetenzprofilen (29, 32, 35),
- Erfassung von Soll-Kompetenzwerten (55, 56) für mindestens eine Person (19-21, 88, 87) zur Bildung eines Soll-Kompetenzprofils (54),
- Vergleich der Ist-Kompetenzwerte (27,28,30,31,33,34) und der Soll-Kompetenzwerte (55, 56) zum Veranlassen zumindest einer Maßnahme.

19. Verfahren zur Ermittlung von Personaldaten mit den Schritten:
- Erfassung von Ist-Kompetenzwerten (27,28,30,31,33,34) von bei einem Unternehmen (22) beschäftigten Personen (19-21, 88, 87) zur Bildung von Ist-Kompetenzprofilen (29, 32, 35),
- Ermittlung mindestens einer finanziellen Bewertungszahl für mindestens eine anhand der Ist-Kompetenzwerte (27,28,30,31,33,34) charakterisierten Person (19-21, 88, 87) durch Multiplikation mindestens eines Ist-Kompetenzwerts (27,28,30,31,33,34) mit einem Bewertungsfaktor, und
- Ausgabe der mindestens einen Bewertungszahl, insbesondere an ein betriebswirtschaftliches Softwaremodul.
